# EUROPÄISCHE PATENTANMELDUNG

(11) **EP 0 629 863 A2**
(43) Veröffentlichungstag der Anmeldung: **21.12.1994**
(21) Anmeldenummer: 94109506.9
(22) Anmeldetag: 20.06.1994
(51) Int. Cl.: G01R 11/00, G07F 7/00

(54) **Verfahren und Vorrichtung zum gesteuerten Freigeben einer Stromversorgung**

(30) Priorität: 21.06.1993 DE 4320458
(71) Anmelder: VES GmbH VERBÜND ELEKTRONIKSYSTEME ST.GEORGEN, D-78112 St. Georgen (DE)
(72) Erfinder: Winterhalder, Klaus Dipl.-Phys., 78050 Villingen-Schwenningen (DE); Litz, Heinz, 78112 Peterzell (DE)
(74) Vertreter: Patentanwälte Westphal, Buchner, Mussgnug Neunert, Göhring

(57) **Zusammenfassung**

Es wird ein Verfahren und eine Vorrichtung zur datenträgergesteuerten Freigabe einer Stromversorgung vorgestellt. Die Vorrichtung besteht vorzugsweise aus einem Zusatzgerät, das an einen Elektrizitätszähler zu montieren ist und einen von einer Steuereinrichtung ansteuerbaren Leistungsschalter aufweist, über den die Stromversorgung für den dem Elektrizitätszähler zugeordneten Teilnehmer bzw. Stromkunden nach Maßgabe der extern über den Datenträger zuführbaren Daten freigegeben wird. Der Datenträger wird mit einer Elektrizitätszählernummer, Stromentnahmedaten sowie einer Kennzeichnung beschrieben, die ein Maß für die Wiederbeschreibvorgänge des Datenträgers ist. Die Steuereinrichtung vergleicht diese Daten und gibt bei einem positiven Vergleichsergebnis durch Ansteuerung des Leistungsschalters die Stromversorgung frei. Anschließend verändert die Steuereinrichtung Ihre interne Kennzeichnung.
**Vorteile:**
- nur ein Datenträger erforderlich
- hohe Sicherheit

## Beschreibung

Die Erfindung betrifft ein Verfahren zum gesteuerten Freigeben einer Stromversorgung gemäß den Merkmalen des Oberbegriffs des Anspruchs 1 sowie eine Vorrichtung zur Durchführung eines solchen Verfahrens.

Es ist bereits ein Zusatzgerät für Elektrizitätszähler unter der Bezeichnung EURO MGZ 01 Version 1.00 bekannt, mit welchem durch Vorauskasse von monatlichen Abschlagszahlungen in Form von Wertkarten mittels einer geeigneten Steuereinrichtung beim Stromkunden die Entnahme der elektrischen Energie freigegeben wird. Hierfür weist das Zusatzgerät, das von einem Fachmann an die Unterseite des Elektrizitätszählers zu montieren ist, einen von der Steuereinrichtung ansteuerbaren Leistungsschalter bzw. Leistungsschütz auf, über den die Stromversorgung für den dem Elektrizitätszähler zugeordneten Teilnehmer bzw. Stromkunden nach Maßgabe extern zuführbarer Daten freigegeben wird. Bei dem bekannten Zusatzgerät werden diese Informationen über Magnetkarten der Steuereirichtung zugeführt.

Prinzipiell wird dort zwischen zwei Kartenarten unterschieden. Die eine wird dem Kunden vom Betreiber und damit dem Elektrizitätsversorgungsunternehmen zur Verfügung gestellt. Sie wird, nachdem die auf ihr enthaltenen Daten von dem Zusatzgerät übernommen worden sind gelöscht und ist damit für eine weitere Verwendung unbrauchbar. Die andere Kartenart kann immer wieder verwendet werden, da ihre Dateninhalte von dem Zusatzgerät nicht verändert werden. Hierzu zählen im einzelnen eine Master-Karte, eine Service-Karte, eine Zählerwechsel-Karte und eine Freie-Energieabnehme-Karte. Bei der ersten Art von Karten wird zusätzlich zwischen einer Kundenwechsel-Karte und einer Kunden-Karte unterschieden.

Die Master-Karte dient zur Initialisierung des Zusatzgerätes und legt dabei alle zählerspezifischen Daten fest. Die Service-Karte dient zur Anzeige aller im Zusatzgerät vorhandenen Daten sowie zur allgemeinen Sperrung bzw. Freigabe der Energieentnahme. Die freie Energieentnahme-Karte ermöglicht es, über das Zusatzgerät Energie freizuschalten, ohne daß dabei eine Verrechnung stattfindet. Die Zählerwechsel-Karte wird benötigt, wenn ein Zählerwechsel vorgenommen werden soll. Dabei ändern sich die jeweils zählerspezifischen Daten im angeschlossenen Zusatzgerät.

Der Betrieb mit den beiden übrigen Karten läuft folgendermaßen ab. Die Kundenkarte erlaubt dem Stromkunden bzw. dem Benutzer des Zusatzgerätes, dieses für die Energieabnahme freizuschalten. Die auf der Karte enthaltenen Daten werden hierbei für die Verrechnung herangezogen. Die Kunden-Karte enthält eine Kundennummer, eine Elektrizitätszählernummer, sowie Stromentnahmedaten. Ist kein Fehler beim Einlesen der Karten aufgetreten, werden die Kundennummer und Zählernummer der Magnetkarte mit denen innerhalb der Steuereinrichtung gespeicherten Daten des Zusatzgerätes verglichen. Bei Identität werden das aktuelle Guthaben angezeigt und die auf der Kundenkarte gespeicherten Stromentnahmedaten in einen Festwertspeicher des Zusatzgerätes übernommen. Auf der Anzeige des Zusatzgerätes wird nach diesem Verbuchen das neue Guthaben für eine vorgegebene Zeit angezeigt. Mit dem Verbuchen des Guthabens wird die Kundenkarte gelöscht, wodurch sie für ein erneutes Verbuchen von Guthaben unbrauchbar wird.

Die Kundenwechsel-Karte wird dagegen eingesetzt, wenn die Kundennummer wechselt. Dabei wird die neue Kundennummer übernommen. Eventuell bestehendes Guthaben oder ein Kredit des vorhergehenden Kunden werden überschrieben. Außerdem dient die Kundenwechsel-Karte auch zur Anzeige des aktuellen Guthabens.

Der Erfindung liegt die Aufgabe zugrunde, das bekannte Verfahren zum gesteuerten Freigeben der Stromversorgung sowie die bekannte Vorrichtung so weiterzubilden, daß eine einfache Handhabung der Stromversorgungsfreigabe über Datenträger gewährleistet und ein unbefugtes Freigeben der Stromversorgung nur erschwert möglich ist.

Diese Aufgabe wird für das Verfahren durch die Merkmale des Anspruchs 1 und für die Vorrichtung durch die Merkmale des Anspruchs 6 gelöst.

Weiterbildungen der Erfindung sind Gegenstand der Unteransprüche.

Das erfindungsgemäße Verfahren zum gesteuerten Freigeben der Stromversorgung eines über einen Elektrizitätszähler an ein Stromversorgungsnetz angeschlossenen Teilnehmers sieht also vor, einen in der Stromversorgungsleitung angeordneten Leistungsschalter nach Maßgabe von auf einem Datenträger befindlichen Stromentnahmedaten, die von einer den Datenträger lesbaren Steuereinrichtung ausgewertet werden, anzusteuern. Hierbei wird der Datenträger zunächst mit Daten für eine zugehörige Elektrizitätszählernummer sowie einer Kennzeichnung beschrieben, welche ein Maß für die Wiederbeschreibvorgänge des Datenträgers ist. Beim Einführen des Datenträgers in die Steuereinrichtung vergleicht diese die Elektrizitätszählernummer, und die Kennzeichnung mit einer intern vorgegebenen Elektrizitätszählernummer sowie einer internen Kennzeichnung. Bei einem positiven Vergleichsergebnis gibt die Steuereinrichtung die Stromversorgung über den Leistungsschalter nach Maßgabe der Stromentnahmedaten frei und ändert die interne Kennzeichnung in eine Kennzeichnung entsprechend dem nächst vorgesehenen Wiederbeschreibvorgang des Datenträgers. Ist das Vergleichsergebnis negativ, hält die Steuereinrichtung den Leistungsschalter geöffnet.

Die Kennzeichnung kann beispielsweise eine laufende Nummer sein. Beim erstmaligen Beschreiben des Datenträgers, der eine Magnetkarte, eine Chipkarte, ein Magnetschlüssel oder ein Chipschlüssel oder dgl. sein kann, kann diese Kennzeichnung beispielsweise den Wert Eins annehmen. Beim erstmaligen Einschieben einer solchen Magnetkarte wird die Steuereinrichtung, die zuvor mit keinerlei Daten versorgt wurde initialisiert, das heißt die auf der Magnetkarte enthaltenen Informationen werden übernommen. Es wird also die Elektrizitätszählernummer, die Stromentnahmedaten sowie die Kennzeichnung, die anzeigt, daß es sich um eine erstmals beschriebene Magnetkarte handelt, übernommen. Sobald die Daten in der Steuereinrichtung gespeichert sind, wird die Kennzeichnung innerhalb der Steuereinrichtung auf den Wert Zwei erhöht.

Benötigt der Stromkunde zu einem späteren Zeitpunkt erneut Strom, muß er sich zum Elektrizitätsversorgungsunternehmen begeben und seine Magnetkarte erneut "auffüllen" lassen. Bei dieser erneuten Programmierung von Stromentnahmedaten auf die Magnetkarte, wird die auf der Magnetkarte befindliche Kennzeichnung geändert, beispielsweise auf die nächst laufende Nummer des Wiederbeschreibvorganges, hier also auf die Nummer 2. Steckt der Stromkunde die erneut "aufgefüllte" Magnetkarte in das Zusatzgerät, wird die Steuereinrichtung erneut einen positiven Vergleich zwischen den Daten auf der Magnetkarte und den intern in der Steuereinrichtung gespeicherten Daten erzielen. Die neuen Stromentnahmedaten können so wieder von der Steuereinrichtung übernommen werden, wodurch der Stromkunde für eine weitere vorgegebene Zeitspanne oder für eine vorgegebene Menge Strom vom Energieversorgungsunternehmen beziehen kann.

Anders dagegen, wenn die einmal gekaufte Magnetkarte vom Stromkunden oder Dritten unzulässigerweise 1:1 kopiert wird. In diesem Fall erhöht sich die auf der kopierten Magnetkarte befindliche Kennzeichnung nicht. Beim Einführen dieser unzulässig angefertigten Magnetkarte wird somit ein negatives Vergleichsergebnis von der Steuereinrichtung erreicht und ein Auffüllen der Stromentnahmedaten in der Steuereinrichtung unmöglich. Eine unzulässige Stromentnahme wird wirksam verhindert.

In einer Weiterbildung der Erfindung ist vorgesehen, daß zum Auslesen und Übernehmen der Stromentnahmedaten eine Schalteinrichtung innerhalb der Steuereinrichtung manuell zu betätigen. Dies hat den Vorteil, daß sich der Stromkunde beim Einschieben des Datenträgers in die Steuereinrichtung noch überlegen kann, ob er tatsächlich die Stromentnahmedaten übernehmen will. Darüber hinaus kann bei einem positiven Vergleichsergebnis der Elektrizitätszählernummer auf dem Datenträger und der Steuereinrichtung eine Anzeigenvorrichtung für eine vorgegebene Zeitspanne aktiviert werden, um das noch vorhandene und in der Steuereinrichtung gespeicherte Guthaben zur Stromentnahme und/oder das Guthaben auf dem Datenträger anzuzeigen.

Hierdurch wird der Vorteil erreicht, daß es mit einem bereits verbrauchten Datenträger zu Kontrollzwecken Kunden jederzeit möglich ist, das noch vorhandene Guthaben zu kontrollieren, so daß der Stromkunde darüber informiert ist, wie lange oder wieviel Stromentnahme noch möglich ist. Die Anzeigenvorrichtung wird hierbei nur für eine vorgegebene Zeitspanne aktiviert, die beispielsweise solange sein kann, wie der Datenträger in der Steuereinrichtung eingeführt ist. Darüber hinaus kann die vorgegebene Zeitspanne ein festes Zeitintervall, beispielsweise 10 Sekunden sein. Hierdurch wird gewährleistet, daß unbefugte Dritte nicht ohne weiteres über das Guthaben des Stromkunden informiert werden. Dies ist insbesondere in größeren Mietanlagen bzw. Miethäusern von Vorteil, wo eine Vielzahl von Elektrizitätszählern und Zusatzgeräten in einem Zählerraum nebeneinander montiert sind.

Zu dem gleichen Zweck dient eine weitere Ausbildung der Erfindung. Die Anzeigenvorrichtung weist vorteilhafterweise eine Bereitschaftsanzeige auf, die kontinuierlich aktiviert wird, solange die Stromversorgungsleitung zur Stromversorgung bereit ist, und die Anzeigenvorrichtung ist und im übrigen dunkel geschaltet ist, solange der Datenträger nicht mit der Steuereinrichtung in Verbindung steht.

In einer Weiterbildung der Erfindung kann der Datenträger zusätzlich mit Kreditdaten beschrieben werden, die dem Teilnehmer eine Überziehung des durch die Stromentnahmedaten vorgegebenen Stromverbrauches ermöglichen. Diese Überziehung wird über eine Kreditschalteinrichtung in der Steuereinrichtung aktiviert. Diese Weiterbildung dient insbesondere dazu, dem Stromkunden in Notfällen noch für eine gewisse Zeit eine Stromentnahme zu erlauben. Dieser Kredit wird pro wiederbeschriebenen Datenträger nur ein einziges Mal freigegeben. Damit die Kreditfunktion vom Stromkunden nicht übersehen wird, wird die Anzeigenvorrichtung während der Kreditphase, also während der Stromkunde auf Kredit Strom entnimmt, nicht ausgeschaltet. Die Anzeigenvorrichtung kann erfindungsgemäß den Kredit in Geldbeträgen oder in Tages- bzw. Stundenbeträgen anzeigen. Der Kredit wird hierbei gegen den Wert 0 gezählt. Ist der gewährte Kredit verbraucht, wird in der Anzeigeneinrichtung eine besondere Anzeige aktiviert, die auf diese Situation eindeutig hinweist. Nur mit einer neuen oder einer neu programmierten Magnetkarte ist eine erneute Stromentnahme für den Stromkunden möglich.

Die erfindungsgemäße Vorrichtung zur Durchführung eines solchen Verfahrens weist folgende Merkmale auf:
- Einen Elektrizitätszähler mit einem Zusatzgerät zum gesteuerten Freigeben der Stromversorgung eines über den Elektrizitätszähler an ein Stromversorgungsnetz angeschlossenen Teilnehmers,
- einen im Zusatzgerät angeordneten Leistungsschalter bzw. Leistungsschüttz zum Freigeben der Stromversorgung, und
- eine im Zusatzgerät angeordnete und den Leistungsschalter ansteuernde Steuereinrichtung, welche nach Maßgabe von auf einem Datenträger befindlichen Stromentnahmedaten den Leistungsschalter betätigt.

Um ein einwandfreies Auslesen der Informationen auf den Datenträger zu gewährleisten, ist die Steuereinrichtung mit einer Datenträgerleseeinheit und einem Mikroprozessor ausgestattet, welcher an seinem Dateneingang über einen Zwischenspeicher mit der Datenträgerleseeinheit in Verbindung steht. Der Zwischenspeicher, der beispielsweise ein einfaches JK-Flip-Flop sein kann dient dazu, die möglicherweise sehr kurzen Impulse (Nadelimpulse) am Ausgang der Datenträgerleseeinheit so aufzubereiten, daß der Mikroprozessor diese sicher verarbeiten kann. Treten beispielsweise sehr kurze Nadelimpulse als Dateninformation auf, dient der Zwischenspeicher dazu, die Nadelimpulse zu verbreitern. Die Verbreiterung solcher Nadelimpulse ist selbstverständlich auf den Abstand von zwei Nadelimpulsen beschränkt.

Eine Weiterbildung der Erfindung sieht innerhalb der Steuereinrichtung eine Speicheranordnung, vorzugsweise einen nichtflüchtigen Speicher vor, in welchem eine Elektrizitätszählernummer, und eine Kennzeichnung speicherbar ist, welche zum Identifizieren eines zulässigen Datenträgers vorgesehen sind. Bei einem erfolgten Übernehmen der Stromentnahmedaten von einem Datenträger wird die Kennzeichnung innerhalb der Speichereinrichtung verändert. Hierdurch wird die oben bereits beschriebene unzulässige Stromentnahme durch 1:1 Kopieren von Datenträgern verhindert.

Da innerhalb der Steuereinrichtung eine Vielzahl von Informationen zwischen den einzelnen Komponenten der Steuereinrichtung ausgetauscht werden müssen, wurde erfindungsgemäß ein Datenbus hierfür in der Steuereinrichtung eingesetzt. Über diesen Datenbus, der insbesondere ein I²-C-Bus sein kann, ist die Datenübertragung in einfacher Weise ohne besonders großen Hardwareaufwand möglich.

Der erfindungsgemäße Datenträger ist wiederbeschreibbar und insbesondere eine Magnetkarte, eine Chipkarte, ein Chipschlüssel oder ein Magnetschlüssel, auf welchen mindestens eine die Anzahl der Wiederbeschreibungsvorgänge identifizierende Kennzeichnung, Stromentnahmedaten, eine Elektrizitätszählernummer und eine Teilnehmernummer gespeichert sind. Auf dem Datenträger können zusätzlich Name, Adresse und Datum der Beschreibung des Datenträgers gespeichert sein. Die Stromentnahmedaten können entweder als Zeitwert oder Geldwert gespeichert sein.

Für Notfälle kann der Servicedienst des Elektrizitätsversorgungsunternehmens eine eigene "Master-Karte" erhalten, mit welcher unabhängig von der Einstellung des Zusatzgerätes eine auf eine vorgegebene, z.B. fünf Tage begrenzte Stromentnahme, freigegeben wird.

Die Erfindung wird nachfolgend anhand eines Ausführungsbeispieles im Zusammenhang mit vier Figuren näher erläutert. Es zeigen:
- Figur 1: Ein Blockschaltbild einer erfindungsgemäßen Vorrichtung zum gesteuerten Freigeben einer Stromversorgung,
- Figur 2: eine Schaltungsanordnung zur Stromentnahmeerfassung,
- Figur 3: eine Magnetkarte als beispielhaften Datenträger nach der Erfindung, und
- Figur 4: ein Funktionsablaufdiagramm zum Lesen des Datenträgers.

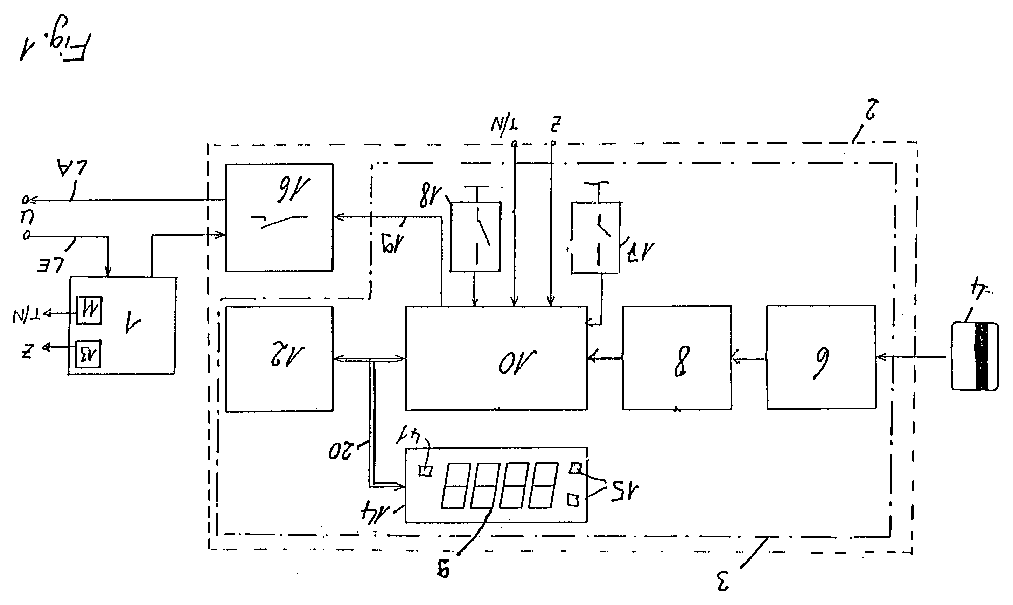

In Figur 1 ist das Blockschaltbild eines erfindungsgemäßen Ausführungsbeispieles für ein Zusatzgerät zum gesteuerten Freigeben der Stromversorgung eines an ein Stromversorgungsnetz angeschlossenen Teilnehmers dargestellt. Der Teilnehmer ist über einen Elektrizitätszähler 1 an Klemmen einer Stromversorgung U angeschlossen. Die Stromversorgungsleitungen sind der Einfachheit halber als Leitungseingang LE und Leitungsausgang LA bezeichnet. In den Leitungseingang LE ist der Elektrizitätszähler 1 eingeschleift. Das Zusatzgerät 2 weist einen Leistungsschalter 16, bzw. Leistungsschütz auf, der in Serie zum Elektrizitätszähler 1 geschaltet ist. Der Leistungsschalter 16 wird von einer mit dem Bezugszeichen 3 gekennzeichneten Steuereinrichtung 3 angesteuert.

Die Steuereinrichtung 3 betätigt den Leistungsschalter 16 mittels einer Steuerleitung 19 nach Maßgabe von Stromentnahmedaten, die auf einem Datenträger 4, im vorliegenden Falle eine Magnetkarte, gespeichert sind.

Zentraler Bestandteil der Steuereinrichtung 3 ist ein Mikroprozessor 10, welcher unter anderem die Stromentnahmedaten des Datenträgers 4 auswertet. Hierfür ist der Mikroprozessor 10 über einen Zwischenspeicher 8 mit einer Datenträgerleseeinrichtung 6 in Verbindung. Die Datenträgerleseeinrichtung 6 ist im Ausführungsbeispiel der Figur 1 ein Magnetkartenleser.

Der Zwischenspeicher 8 ist nicht unbedingt in der Steuereinrichtung 3 notwendig, jedoch vorteilhaft, wenn am Ausgang der Datenträger-Leseeinrichtung 6 sehr kurze Datenimpulse, beispielsweise Nadelimpulse, anstehen. Solche Nadelimpulse können insbesondere dann auftreten, wenn die Magnetkarte sehr schnell in die Datenträger-Leseeinrichtung 6 eingeführt wird. Der Zwischenspeicher 8 dient dann dazu, diese Nadelimpulse zeitlich zu dehnen, so daß der Mikroprozessor 10 in einfacher Weise ohne erhöhten Aufwand diese Nadelimpulse detektieren kann. Vorteilhafterweise wird jedoch bereits für den Mikroprozessor 10 ein schneller Prozessor, beispielsweise ein Mikroprozessor der Firma Mikrochip mit der Bezeichnung Risc-CPU PIC16 C57 eingesetzt. Der Mikroprozessor 10 wird vorzugsweise mit einem 4 MHZ-Quarz- oder Keramikschwinger getaktet.

Der Mikroprozessor 10 ist darüber hinaus über einen Datenbus 20, insbesondere einen I²C-Bus, mit einer Anzeigeneinrichtung 14 sowie einer Speichereinrichtung 12, vorzugsweise einem nicht flüchtigen Speicher, in Verbindung. Der nicht flüchtige Speicher 12 kann z.B. ein EEPROM sein, der seine Daten auch bei Stromausfall speichert. Als Speicherkapazität können beispielsweise 128 oder 256 Byte vorgesehen werden.

Besonders preiswert und zuverlässig läßt sich der Zwischenspeicher 8 durch einen schnellen 2-Bit-Speicher in Low-Power-Schottky-Technik realisieren. Ein hierfür eingesetztes JK-Flip-Flop speichert die Takt- und Datensignale. Der Mikroprozessor 10 erkennt den Takt, liest die Daten ein und gibt mit einem Steuersignal den Zwischenspeicher 8 für die nächste Information wieder frei.

Der Mikroprozessor 10 ist zusätzlich mit zwei weiteren Schalteinrichtungen 17, 18 verbunden, die an einer Bedientafel des Zusatzgerätes 2 für eine manuelle Betätigung durch den Stromkunden angebracht sind. Die eine Schalteinrichtung 18 dient dazu, bei in die Datenträger-Leseeinrichtung 6 eingelegtem Datenträger 4 eine Übernahme der Stromentnahmedaten auszulösen, während die andere Schalteinrichtung 17 als Kreditschalteinrichtung vorgesehen ist. Bei Betätigung dieser Kreditschalteinrichtung wird dem Stromkunden zusätzlich eine Überziehung des durch die Stromentnahmedaten vorgegebenen Stromverbrauches nach Maßgabe von auf dem Datenträger 4 befindlichen Kreditdaten ermöglicht. Die Schalteinrichtungen 17 und 18 können auch durch einen gemeinsamen Schalter realisiert sein.

Zusätzlich gelangen an den Mikroprozessor 10 weitere Signale, nämlich Zählimpulse Z sowie ein Tag/Nacht-Signal T/N. Diese Signale Z und T/N sind notwendig, um eine korrekte Ansteuerung des Leistungsschalters 16 zu gewährleisten. Das Signal Z stellt ein Maß für den Stromverbrauch dar und kann beispielsweise über einen induktiven Näherungsschalter 13, der innerhalb des Elektrizitätszählers 1 angebracht ist, bereitgestellt werden. Dieser induktive Näherungsschalter 13 erfaßt z.B. die Umdrehung der sich im Elektrizitätszähler befindlichen Scheibe, die sich bei Stromentnahme je nach Menge des augenblicklich entnommenen Stromes mehr oder weniger schnell dreht. Der induktive Näherungsschalter 13 erfaßt dieses Drehen und gibt für jede Umdrehung einen oder mehrere Impulse an den Mikroprozessor 10 ab. Diese Zählerimpulse stellen das Signal Z in Figur 1 dar.

Das Tag-/Nachtsignal T/N wird von einer Tag-/Nachterkennungseinrichtung 11, die sich im Elektrizitätszähler 1 oder innerhalb des Zusatzgerätes 2 befinden kann, erfaßt. Die Tag-/Nachterkennungseinrichtung 11 erfaßt hierbei ein von dem Elektrizitätsversorgungsunternehmen auf der Stromversorgungsleitung bereitgestelltes Signal, das angibt, ob die Stromentnahme zu Tag- oder Nachtzeiten erfolgt. Dieses Signal T/N wird ebenfalls dem Mikroprozessor 10 zugeführt.

Wie in Figur 1 zu erkennen ist, verfügt die Anzeigeneinrichtung 14 neben einer alphanumerischen Anzeige 9 noch über eine Bereitschaftsanzeige 15, welche bei Bereitschaft des Zusatzgerätes 2 ständig aufleuchtet. Die Funktionsweise der Anzeigeneinrichtung 14 wird nachstehend noch näher erläutert.

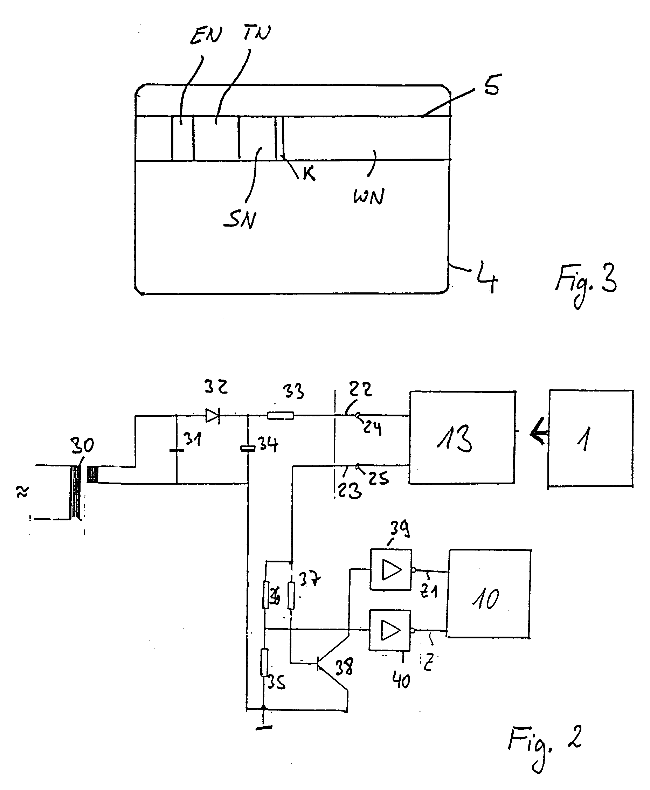

In Figur 2 ist ein Ausführungsbeispiel einer Schaltungsanordnung dargestellt, die zum Bereitstellen von Zählerimpulsen Z eingesetzt werden kann. In der Schaltung ist schematisch wieder der Elektrizitätszähler 1 dargestellt, der mit dem induktiven Näherungsschalter 13 zum Erfassen der augenblicklichen Stromentnahme gekoppelt ist. Der induktive Näherungsschalter 13 wird über eine Zweidrahtleitung, bestehend aus den Leitungen 22, 23 mit Strom versorgt. Gemäß DIN 43864 dient diese Zweidrahtleitung auch zur Zählimpulsübertragung.

Im einzelnen sind die beiden Leitungen 22, 23 an Klemmen 24, 25 geschaltet, die einerseits mit dem induktiven Näherungsschalter 13 in Verbindung stehen und andererseits an eine Spannungsversorgungsschaltung angeschlossen sind. Die Spannungsversorgungsschaltung besteht erfindungsgemäß aus einem Transformator 30, der primärseitig an ein Wechselspannungsnetz und sekundärseitig mit einer Einweggleichrichteranordnung verbunden ist. Die Einweggleichrichteranordnung besteht im vorliegenden Fall aus einem parallel zur Sekundärwicklung des Transformators 30 geschalteten Kondensator 31, einer zwischen der Klemme 24 und dem nicht auf Bezugspotential liegenden Anschluß der Sekundärwicklung des Transformators 30 angeordneten Reihenschaltung einer Diode 32 und eines Widerstandes 33. Der Anodenanschluß der Diode 32 ist mit der Sekundärwicklung des Transformators 30 und der Kathodenanschluß mit dem Widerstand 33 in Verbindung. Zwischen Bezugspotential und dem Verbindungspunkt der Diode 32 und des Widerstandes 33 ist ein weiterer Kondensator 34 geschaltet. Zwischen Bezugspotential und der Klemme 25 ist die Serienschaltung von zwei Widerständen 35, 36 angeordnet. Der Verbindungspunkt zwischen den beiden Widerständen 35 und 36 ist über einen Verstärker 40 an den Mikroprozessor 10 geschaltet. Am Ausgang des Verstärkers 40 ist das bereits erwähnte Zählerimpulssignal Z abgreifbar. Die Klemme 25 ist zusätzlich über einen weiteren Widerstand 37 mit dem Basisanschluß eines npn-Transistors 38 in Verbindung, dessen Emitteranschluß auf Bezugspotential liegt und dessen Kollektoranschluß über einen Verstärker 39 ebenfalls mit dem Mikroprozessor 10 in Verbindung steht. Am Ausgang des Verstärkers 39 ist ein Impulserkennungssignal Z1 abgreifbar, das anzeigt, ob ein Ruhestrom in der Zweidrahtleitung zum induktiven Näherungsschalter 13 fließt. Damit wird erkannt, ob überhaupt Strom zur Stromentnahme zur Verfügung steht.

An den Klemmen 24, 25 wird eine Spannungsversorgung von etwa 18 bis 27 Volt mit einem Innenwiderstand von etwa 1 kOHM bereitgestellt. Beim Impulszählen wird diese Spannung unterschiedlich belastet und so die Information an den Mikroprozessor 10 übertragen. Es ist vorgesehen, als Zählimpulskontrolle eine weitere Anzeige 41 in Figur 1, z.B. eine einfache Leuchtdiode, in der Anzeigeneinrichtung 14 aufleuchten zu lassen.

In Figur 3 ist ein Ausführungsbeispiel eines Datenträgers 4 in Form einer Magnetkarte mit einem Magnetstreifen 5 gezeigt. Der Magnetstreifen 5 enthält unterschiedlichste Informationen, mindestens jedoch eine Elektrizitätszählernummer EN, eine Teilnehmernummer TN, Stromentnahmedaten SN und die bereits erwähnte Kennzeichnung K. Darüber hinaus können auf dem Magnetstreifen weitere Informationen WN abgespeichert sein. Die Elektrizitätszählernummer EN kann beispielsweise eine sechs-stellige Zählernummer sein. Als Stromentnahmedaten SN können verschiedene Werte in einer vorgegebenen Währung oder Zeitwerte, beispielsweise Tage, gespeichert sein. Darüber hinaus ist es möglich, bei den Stromentnahmedaten SN einen Wertfaktor für den Tagtarif und einen Wertfaktor für den Nachttarif abzuspeichern.

Die Kennzeichnung K kann beispielsweise eine laufende Nummer sein, die die Anzahl der Wiederbeschreibvorgänge des Datenträgers 4 durch das Energieversorgungsunternehmen angibt. Zusätzlich kann diese Kennzeichnung K auch eine Information über die Anzahl der an den Stromkunden ausgegebenen Karten enthalten.

Die Daten können auf dem Magnetstreifen 5 auf beliebige Art und Weise abgespeichert werden. Es können beispielsweise zwei oder drei Magnetspuren zur Verfügung gestellt werden.

Die praktische Handhabung der erfindungsgemäßen Vorrichtung zum gesteuerten Freigeben der Stromversorgung kann z.B. folgendermaßen gewählt werden.

Die Anzeigenvorrichtung 14 zeigt beim Neustart oder nach Drücken einer "Clear-Taste" den Wert "0000". Anschließend wird der Datenträger 4, im vorliegenden Fall die Magnetkarte, in einen dafür vorgesehenen Magnetkartenschlitz der Datenträgerleseeinrichtung 6 eingeführt. Der auf dem Datenträger 4 gespeicherte Wert der Stromentnahmedaten wird in der Anzeigeneinrichtung 14 in einem Geldwert, beispielsweise Deutsche Mark, oder einem Zeitwert, beispielsweige Tagen, angezeigt. Die Anzeigenvorrichtung 14 befindet sich in Datenübernahmebereitschaft und signalisiert dies durch ein Blinken der Anzeige. Durch Betätigen der Schalteinrichtung 18, beispielsweise einer Taste, werden die Stromentnahmedaten vom Datenträger 4 in die Steuereinrichtung 3 übernommen. Hierfür dient der Mikroprozessor 10 samt Speicher 12. Die Anzeigenvorrichtung 14 zeigt den übernommenen Wert, der dem Stromkunden unmittelbar nach Übernahme der Daten zum Verbrauch zur Verfügung steht.

Wenn der Datenträger 4 in der Datenträgerleseeinrichtung 6 eingeführt ist, ist die Anzeigenvorrichtung 14 eingeschaltet. Wird zusätzlich die Kreditschalteinrichtung 17, der Einfachheit halber wieder eine Taste, gedrückt, wird der dem Stromkunden bewilligte Kredit angezeigt.

Bei Entnahme des Datenträgers 4 aus der Datenträgerleseeinrichtung 6 erlischt vorzugsweise die Anzeige, so daß Dritte ohne die entsprechende Magnetkarte keinen Zugriff darauf haben, zu erkennen, wieviel Strom dem anderen noch zusteht. Dies dient auch einem wirksamen Datenschutz.

Mit der zu dem entsprechenden Stromkunden und Elektrizitätszähler 1 passenden Magnetkarte läßt sich jedoch jederzeit die Anzeige der Anzeigenvorrichtung 14 wieder aktivieren und das restliche Guthaben ablesen.

Wird eine neu programmierte Magnetkarte in die Datenträgerleseeinrichtung 6 eingeschoben, wird der noch zur Verfügung stehende Restwert und der Wert der neuen Magnetkarte abwechselnd angezeigt. Die blinkende Anzeige signalisiert Datenübernahme-Bereitschaft, und mit einem Tastendruck wird dieser Wert übernommen.

Beim Drücken der Kreditschalteinrichtung 17 ohne in die Datenträgerleseeinrichtung 6 eingeführte Magnetkarte werden zur Kontrolle und für einen Servicetechniker sowohl die Kartennummern und die entsprechenden Codierzyklen angezeigt. Nach einer vorgegebenen Zeitspanne, z.B. zwei Sekunden, erlischt die Anzeige der Anzeigenvorrichtung 14 wieder automatisch.

Ist die über die Magnetkarte eingekaufte Energie aufgebraucht, schaltet sich die Anzeige der Anzeigenvorrichtung wieder ein und zeigt den Wert "0000".

Mit dem Einschieben einer neucodierten Magnetkarte wird die Stromentnahme für den entsprechenden Stromkunden wieder möglich. Die Neucodierung erfolgt nach Einzahlung eines entsprechenden Geldbetrages durch das Energieversorgungsunternehmen.

Für Notfälle, wie z.B. Wochenenden, Feiertage usw., steht dem Stromkunden ein Kredit zur Verfügung, der zuvor beim Energieversorgungsunternehmen auf den Datenträger programmiert wurde. Zeigt die Anzeige 0000 und wird die Kreditschalteinrichtung 17 betätigt, wird der zuvor gespeicherte Kredit einmalig freigegeben. Bei einem Kredit von beispielsweise DM 10,00 zeigt die Anzeige C10.0. Die Bereitschaftsanzeige 15 leuchtet. Bei einem Kredit von beispielsweise 15 Tagen zeigt dagegen die Anzeige C015. Die Bereitschaftsanzeige 15 leuchtet ebenfalls. Der Kredit wird über die Anzeigenvorrichtung 14 gegen Null gezählt. Damit die Kreditfunktion nicht übersehen wird, wird vorteilhafterweise während der Kreditphase die Anzeige nicht ausgeschaltet. Ist der Kredit abgelaufen, ist dies eindeutig an der alphanumerischen Anzeige 9 der Anzeigenvorrichtung 14 erkennbar, beispielsweise indem CCCC angezeigt wird. Nur mit einer neuen oder einer neucodierten Magnetkarte ist eine erneute Stromentnahme möglich.

Die Entscheidung, ob die Abrechnung geldwertmäßig oder zeitwertmäßig erfolgt, wird bei der ersten Inbetriebnahme der erfindungsgemäßen Vorrichtung festgelegt. Eine Umstellung des Abrechnungsmodus ist nur durch einen speziell vom Energieversorgungsunternehmen hierfür autorisierten Servicetechniker oder bei der Anzeige 0000 möglich.

Für Notfälle verfügt die Serviceabteilung des Energieversorgungsunternehmens über eine sogenannte "Master-Kredit-Karte", mit der unabhängig von der Grundeinstellung der erfindungsgemäßen Vorrichtung eine auf eine vorgegebene Zeit begrenzte, z.B. 5 Tage, Stromentnahme freigegeben wird. Dieser Service kann nur bei der Anzeige CCCC in Anspruch genommen werden.

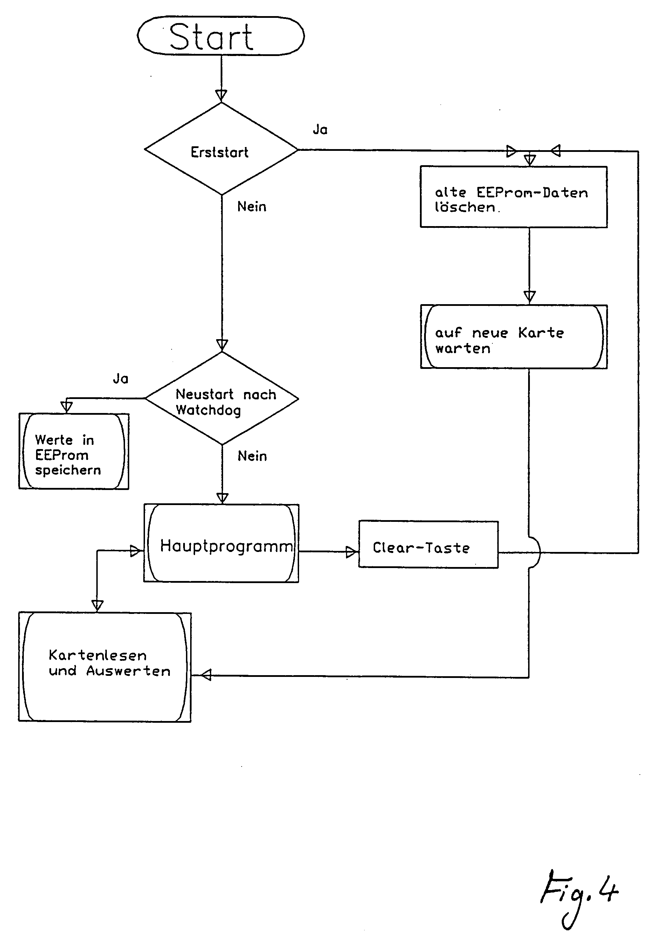

Das im Mikroprozessor 10 gespeicherte Programm zum Auslesen der auf dem Datenträger 4 gespeicherten Daten sowie der Übernahme in die Speichereinrichtung 12 wird anhand eines Signalflußplanes in Figur 4 erläutert.

Das Programm prüft zunächst beim Start, ob es sich um einen Erststart, einen Neustart nach einem Stromausfall (watchdog) oder einen normalen Start handelt. Bei einem Erststart, der an fehlenden Daten in der Speichereinrichtung 12 erkannt wird, wartet das Programm zunächst auf das Einführen des Datenträgers 4 in die Datenträgerleseeinrichtung 6, um sich selber zu initialisieren und dann in das Hauptprogramm überzugehen. Als Speichereinrichtung wird im Signalflußlaufplan der Figur 4 ein EEPROM angenommen. Bei Stromausfall erfolgt ein sogenannter Watchdogstart, d.h. alle Stromverbraucher, auch die Anzeigenvorrichtung, werden abgeschaltet und alle relevanten Daten im EEPROM gesichert. Im übrigen startet der Mikroprozessor 10 das Hauptprogramm.

Das Hauptprogramm steuert das Ein- und Ausschalten des Leistungsschalters 16 und überwacht somit die Freigabe entsprechend dem Tage- bzw. Geldwertguthaben, das vom Datenträger 4 in das EEPROM übernommen wurde. Zum "Herunterzählen" des Guthabens entsprechend dem Stromverbrauch des Stromkunden wertet der Mikroprozessor 10 sowohl die Zählimpulse Z als auch das Tag/Nachtsignal T/N aus. Der Mikroprozessor 10 steuert darüber hinaus die Anzeigenvorrichtung 14. Als Zeitbasis dient vorteilhafterweise die Netzfrequenz in Höhe von 50 bzw. 60 Hz.

Die Datenträgererkennung ist als Softwareinterrupt ausgeführt und verzweigt in die Kartenleseroutine. Die zuvor erwähnte Clear-Taste sorgt für einen softwaregesteuerten Erststart, d.h. alle alten Daten gehen verloren. In der Kartenleseroutine werden die Kartendaten eingelesen, geprüft und gegebenenfalls in einer Speichereinrichtung des Mikroprozessors 10 oder der Speichereinrichtung 12 aktualisiert.

### Bezugszeichenliste

- 1: Elektrizitätszähler
- 2: Zusatzgerät
- 3: Steuereinrichtung
- 4: Datenträger
- 5: Magnetstreifen
- 6: Datenträgerleseeinrichtung
- 8: Zwischenspeicher
- 9: alphanumerische Auszüge
- 10: Mikroprozessor
- 11: Tag-/Nachterkennung
- 12: Speichereinrichtung
- 13: induktiver Näherungsschalter
- 14: Anzeigenvorrichtung
- 15: Bereitschaftsanzeige
- 16: Leistungsschalter
- 17: Kreditschalteinrichtung
- 18: Schalteinrichtung
- 19: Steuerleitung
- 22: Leitung
- 23: Leitung
- 24: Klemme
- 25: Klemme
- 30: Transformator
- 31: Kondensator
- 32: Diode
- 33: Widerstand
- 34: Kondensator
- 35: Widerstand

- 36: Widerstand
- 37: Widerstand
- 38: Transistor
- 39: Verstärker
- 40: Verstärker

### Sonstiges

- LE: Leitungseingang
- La: Leitungsausgang
- Z: Zahlimpuls
- T/N: Tag-/Nachtsignal
- U: Stromversorgung
- EN: Elektrizitätszählnummer
- TN: Teilnehmernummer
- SD: Stromentnahmedaten
- WN: weitere Daten
- K: Kennzeichnung
- Z: Signal
- Z1: Impulserkennungssignal

## Patentansprüche

1. Verfahren zum gesteuerten Freigeben der Stromversorgung eines über einen Elektrizitätszähler (1) an ein Stromversorgungsnetz angeschlossenen Teilnehmers nach Maßgabe von auf einem Datenträger (4) befindlichen Stromentnahmedaten (SD) mittels eines in der Stromversorgungsleitung (LE, LA) angeordneten und von einer den Datenträger (4) lesbaren Steuereinrichtung (3) gesteuerten Leistungsschalters (16), gekennzeichnet durch die Verfahrensschritte:
- Der Datenträger (4) wird mit Daten für eine Elektrizitätszählernummer (EN) sowie einer Kennzeichnung (K) beschrieben, welche ein Maß für die Wiederbeschreibvor gänge des Datenträgers (4) ist,
- die Steuereinrichtung (3) vergleicht die Elektrizitätszählernummer (EN) und die Kennzeichnung (K) mit einer intern vorgegebenen Elektrizitätszählernummer sowie einer Kennzeichnung,
- bei einem positiven Vergleichsergebnis gibt die Steuereinrichtung (3) die Stromversorgung über den Leistungsschalter (16) nach Maßgabe der Stromentnahmedaten (SD) frei und ändert die interne Kennzeichnung (K) in eine Kennzeichnung (K') entsprechend dem nächst vorgesehenen Wiederbeschreibvorgang des Datenträgers (4), und
- bei einem negativem Vergleichsergebnis hält die Steuereinrichtung (3) den Leistungsschalter (16) geöffnet.

2. Verfahren nach Anspruch 1, dadurch gekennzeichnet, daß zum Auslesen und Übernehmen der Stromentnahmedaten (SD) eine Schalteinrichtung (18) der Steuereinrichtung (3) manuell zu betätigen ist.

3. Verfahren nach Anspruch 1 oder 2, dadurch gekennzeichnet, daß bei einem positiven Vergleichsergebnis der Elektrizitätszählernummern (EN) eine Anzeigenvorrichtung (14) für eine vorgegebene Zeitspanne aktiviert wird und das noch vorhandene und in der Steuereinrichtung (3) gespeicherte Guthaben zur Stromentnahme und/oder das Guthaben auf dem Datenträger (4) angezeigt wird.

4. Verfahren nach Anspruch 3, dadurch gekennzeichnet, daß die Anzeigenvorrichtung (14) eine Bereitschaftsanzeige (15) aufweist, die kontinuierlich aktiviert wird, solange die Stromversorgungsleitung (LE, LA) zur Stromversorgung bereit ist, und im übrigen dunkel geschaltet ist, solange der Datenträger (4) nicht mit der Steuereinrichtung (3) in Verbindung steht.

5. Verfahren nach einem der Ansprüche 1 bis 4, dadurch gekennzeichnet, daß der Datenträger (4) zusätzlich mit Kreditdaten (KN) beschrieben wird, die dem Teilnehmer eine Überziehung des durch die Stromentnahmedaten (SD) vorgegebenen Stromverbrauches ermöglicht und diese Überziehung über eine Kreditschalteinrichtung (17) in der Steuereinrichtung (3) aktiviert wird.

6. Vorrichtung zur Durchführung des Verfahrens nach einem der Ansprüche 1 bis 5, gekennzeichnet durch die Merkmale:
- Einem Elektrizitätszähler (1) mit einem Zusatzgerät (2) zum gesteuerten Freigeben der Stromversorgung eines über den Elektrizitätszähler (1) an ein Stromversorgungsnetz angeschlossenen Teilnehmers,
- einen im Zusatzgerät (2) angeordneten Leistungsschalter (16) zum Freigeben der Stromversorgung, und
- eine im Zusatzgerät (2) angeordnete und den Leistungsschalter (16) ansteuernde Steuereinrichtung (3), welche nach Maßgabe von auf einem Datenträger (4) befindlichen Stromentnahmedaten (SD) den Leistungsschalter (16) betätigt.

7. Vorrichtung nach Anspruch 6, dadurch gekennzeichnet, daß die Steuereinrichtung (3) eine Datenträgerleseeinheit (6) aufweist, die ausgangsseitig über einen Zwischenspeicher (8) mit einem Eingang eines Mikroprozessors (10) verbunden ist.

8. Vorrichtung nach Anspruch 6 oder 7, dadurch gekennzeichnet, daß in der Steuereinrichtung (3) eine Speicheranordnung (12) vorgesehen ist, in welchem eine Elektrizitätszählernummer (EN) und eine Kennzeichnung (K) speicherbar ist, welche zum Identifizieren eines zulässigen Datenträgers (4) vorgesehen sind, wobei durch die Steuereinrichtung (3) bei einem erfolgten Übernehmen der Stromentnahmedaten (SD) eines Datenträgers (4) die Kennzeichnung (K) veränderbar ist.

9. Vorrichtung nach einem der Ansprüche 6 bis 8, dadurch gekennzeichnet, daß in der Steuereinrichtung (3) ein Datenbus (20), insbesondere ein I²-C-Bus zur Datenübertragung vorgesehen ist.

10. Vorrichtung nach einem der Ansprüche 6 bis 9, gekennzeichnet durch einen wiederbeschreibbaren Datenträger (4), insbesondere eine Magnetkarte, Chipkarte, einen Chipschlüssel oder einen Magnetschlüssel, auf welchem mindestens eine die Anzahl der Wiederbeschreibungsvorgänge identifizierende Kennzeichnung (K), Stromentnahmedaten (SD) und eine Elektrizitätszählernummer (IN) gespeichert sind.
